# EUROPÄISCHE PATENTSCHRIFT

(11) **EP 1 336 793 B1**
(45) Veröffentlichungstag und Bekanntmachung des Hinweises auf die Patenterteilung: **13.02.2008**
(21) Anmeldenummer: 02026954.4
(22) Anmeldetag: 04.12.2002
(51) Int. Cl.: F16N 31/02, F16H 57/04

(54) **Offenes Zahnradgetriebe und Schmierstoff-Sammler**
Open gear set and grease collector
Engrenages découverts et collecteur de graisse

(30) Priorität: 14.02.2002 DE 20202245 U
(43) Veröffentlichungstag der Anmeldung: 20.08.2003
(73) Patentinhaber: Willy Vogel Aktiengesellschaft, 12277 Berlin (DE)
(72) Erfinder: Hess, Dieter, 67245 Lambsheim/Pfalz (DE); Saam, Werner, 68794 Oberhausen-Rheinhausen (DE)
(74) Vertreter: Grünecker, Kinkeldey, Stockmair & Schwanhäusser Anwaltssozietät

(56) Entgegenhaltungen:
- JP-A- 3 107 516
- JP-A- 58 074 831
- US-A- 1 699 920
- US-A- 3 854 553
- US-A- 3 990 539
- US-A- 4 057 126

## Beschreibung

Die Erfindung betriff ein offenes Zahnradgetriebe gemäß Oberbegriff des Anspruchs 1.

Offene Zahnradgetriebe haben den Nachteil, dass zumindest ein Teil eines drehangetriebenen Zahnrades freiliegend angeordnet ist und Schmierstoff (Fett, Öl oder andere Schmierstoffe) von den Zahnflanken durch den Verzahnungseingriff allmählich vorwiegend in Richtung zu den Seitenflächen des Zahnrades wandern, dort austritt und entweder herabfällt oder sich an den Seitenflächen sammelt und dann herabfällt. Schmierstoffe sind im überwiegenden Maß umweltgefährdend. Bei Windkraftanlage, Skiliften, Förderwerken und ähnlichen Einrichtungen mit offenen Zahnradgetrieben gelangt so der Schmierstoff in die Umwelt, ins Wasser oder in den Boden, wo er kritische Verunreinigungen hervorrufen kann.

Aus der JP 5807 4831 A sind eine erste Pumpe zur Zuleitung eines Schmieröls und eine zweite Pumpe zum Ansaugen des Schmieröls parallel zwischen einem Motorgehäuse und einem Lader eines Motorrads angeordnet. Die beiden Pumpen sitzen auf der gleichen Welle, die durch einen Kettentrieb über die Kurbelwelle angetrieben wird. Der Lader ist über Leitungen mit Pumpen verbunden, wobei die ableitende Pumpe mit einem Ölsammelbehälter im Gehäuse verbunden ist.

Die JP 3107516 A betrifft eine Ölpumpe eines Verbrennungskraftmotors. Die Ölpumpe pumpt das Öl mittels einer Ölrückförderpumpe nach oben, um das Öl in einem Öltank zu lagern und nicht in einer Ölwanne. Die Ölrückförderpumpe wird an einer einzigen Antriebswelle zusammen mit einer Druckpumpe befestigt. An einem Ende der Antriebswelle ist ein Ritzel befestigt, das über eine Kette 13 mit einer Kurbelwelle verbunden und von dieser angetrieben ist. Die Ölrückförderpumpe saugt das Öl in einem Kurbelwellengehäuse über jeweilige Eintrittsöffnungen an, die an zwei in Längsrichtung des Kurbelwellengehäuses an zwei Stellen vorgesehen sind.

Der Erfindung liegt die Aufgabe zugrunde, ein offenes Zahnradgetriebe der eingangs genannten Art zu schaffen, und einen Schmierstoff-Sammler, mit denen die Umweltgefährdung durch von offenen Zahnradgetrieben unkontrolliert austretenden Schmierstoff verhindert wird.

Die gestellte Aufgabe wird mit den Merkmalen des Anspruches 1 gelöst.

Das Schmierstoff-Abnahmeelement entfernt permanent den Schmierstoff vom Zahnrad und fördert ihn zur Ableitvorrichtung, wo er vom Abnahmeelement abgenommen und in die Sammelkammer gebracht wird. In der Sammelkammer ist der Schmierstoff sicher geborgen. Die Sammelkammer wird dann turnusmäßig geleert. Der gesammelte Schmierstoff kann gegebenenfalls wieder verwertet oder entsorgt werden und gelangt nicht mehr in die Umwelt. Der Schmierstoff-Sammler ist eine einfache, universell einsetzbare Baueinheit, mit der sich die Umweltgefährdung offener Zahnradgetriebe beseitigen lässt.

Zweckmäßig weist der Antrieb ein Ritzel auf, das vom Zahnradgetriebe angetrieben wird, und vorzugsweise sogar mit dem vom Abnahmeelement kontaktierten oder einem anderen Zahnrad des Zahnradgetriebes kämmt, um die Förderbewegung auf das Abnahmeelement zu übertragen. Dies spart einen eigenen Antrieb ein. Alternativ kann jedoch auch ein eigener Antrieb für das Abnahmeelement vorgesehen sein, um vom Zahnradgetriebe unabhängig und mit vorbestimmter Förderrichtung und Fördergeschwindigkeit den abgenommenen Schmierstoff abzutransportieren.

Baulich einfach ist das Abnahmeelement scheibenförmig oder rundbürstenförmig und drehbar angeordnet, wobei sein Kontaktbereich mit dem Zahnrad nachgiebig sein sollte.

Alternativ kann das Abnahmeelement auch aus mehreren, um eine Antriebsachse drehbar angeordneten Einzelbürsten oder Einzelabstreifern bestehen, die bei der Förderbewegung nacheinander das Zahnrad beaufschlagen.

Damit der Schmierstoff permanent und zuverlässig abgenommen wird, sollte das Abnahmeelement saugfähig und zumindest in seinem Außenbereich nachgiebig verformbar ausgebildet sein.

Die Ableitvorrichtung kann wenigstens einen relativ zum Abnahmeelement stationären, an diesem angreifenden Abstreifer aufweisen, der den vom Abnahmeelement mitgebrachten Schmierstoff gleich zum überwiegenden Teil übernimmt. Wenn die Sammelkammer unterhalb der Ableitvorrichtung angeordnet ist, wird die Schwerkraft genutzt, um den übernommenen Schmierstoff in die Sammelkammer zu fördern. Die Ableitvorrichtung könnte auch mehrere Abstreifer umfassen. Grundsätzlich können auch Zentrifugalkräfte zum Fördern des Schmierstoffs dienen, z.B. wenn das gesamte Getriebe rotiert.

Bei einer zweckmäßigen Ausführungsform ist das Zahnrad ein Stirnrad mit im Wesentlichen ebenen Seitenflächen. Der Fettsammler ist so angeordnet, dass das Abnahmeelement die in irgendeiner Richtung nach unten weisende Seitenfläche des Zahnrades von außen her und unterseitig kontaktiert und dabei bis über die Zahnlückengründe nach innen greift. Auf diese Weise ist sichergestellt, dass der gesamte Bereich der Seitenfläche des Zahnrades von Schmierstoff gereinigt wird, an dem sich Schmierstoff zu sammeln pflegt. Die oben liegende Seitenfläche ist hinsichtlich der Umweltgefährdung weniger kritisch, da sich dort sammelnder Schmierstoff ohnedies allmählich nach unten gelangt und dann ebenfalls von dem Abnahmeelement weggefördert wird.

Besser ist es jedoch, beide Seitenflächen des Zahnrades mit Abnahmeelementen abzustreifen. Dann spielt die Lage des Zahnrades im Raum, wie z.B. senkrecht, keine Rolle.

Der Antrieb sollte zweckmäßigerweise an einer Welle angreifen, an der das oder die Abnahmeelemente angeordnet sind.

Dabei sollte das die Drehbewegung übertragende Ritzel auf der Welle angeordnet sein und einen kleineren Außendurchmesser besitzen als das Abnahmeelement.

Bei zwei Abnahmeelementen auf der Welle ist das Ritzel zweckmäßigerweise dazwischen auf der Welle angeordnet.

Die Ableitvorrichtung ist zweckmäßigerweise auf der dem Zahnrad abgewandten Seite im Inneren des Schmierstoff-Sammlers angeordnet, um sicherzustellen, dass der abgenommene Schmierstoff nicht versehentlich aus dem Schmierstoff-Sammler nach außen treten kann.

Baulich einfach ist der Schmierstoff-Sammler mit einem rohrartigen Gehäuse ausgebildet, das sich bequem in jeder Lage in Zuordnung zu dem Zahnrad festlegen lässt, umfasst das Gehäuse eine obere Aufnahmesektion und eine untere Sammelsektion, sind das Abnahmeelement, der Antrieb und die Ableitvorrichtung in der oberen Aufnahmesektion angeordnet, befindet sich die Sammelkammer in der unteren Sammelsektion, um die Schwerkraft nützen zu können, und führt von der oberen Sektion wenigstens ein Ableitpfad in die Sammelkammer. Auf diese Weise gelangt vom Zahnrad entfernter Schmierstoff bequem in die Sammelkammer. Der Schmierstoff-Sammler kann im übrigen mit einer Füllstandsmelde-Vorrichtung ausgestattet sein, die dann ein optisches oder visuelles Signal anbietet, wenn die Sammelkammer voll zu werden droht. Ferner könnte jedes Abnahmeelement gleichzeitig mehr als ein Zahnrad reinigen, oder könnten in einem Sammler mehrere Abnahmeelemente für mehrere Zahnräder vorgesehen sein.

Das wenigstens eine Abnahmeelement sollte zum überwiegenden Teil im Inneren der oberen Aufnahmesektion gelagert sein und durch einen Wandschlitz nach außen zum Zahnrad vorstehen. Dadurch gelangt der abgenommene Schmierstoff auf kürzestem Weg ins Innere des Schmierstoff-Sammlers und sind die beweglichen und stationären Komponenten des Schmierstoff-Sammlers gegen Umwelteinflüsse geschützt untergebracht.

Besonders zweckmäßig ist die untere Sammelsektion des Gehäuses ein abnehmbarer Behälter. Dies erleichtert das rasche und bequeme Beseitigen des gesammelten Schmierstoffs ohne Demontage des Schmierstoffsammlers.

Baulich einfach ist die Ableitvorrichtung eine stehend montierte Wand, die mit Abstreif- und Quetschrändern am Abnahmeelement angreift und den mitgebrachten Schmierstoff kraft- und formschlüssig beseitigt, so dass das Abnahmeelement bei neuerlichem Kontakt mit dem Zahnrad wieder voll aufnahmefähig ist.

Die Wand kann eine ebene oder gebogene Platte sein, in die von den Rändern zu einem Mittelsteg verlaufende Schlitze eingeformt sind, die in Richtung zum Mittelsteg konvergieren. Durch die Ränder wird der flexible Außenbereich des Abnahmeelementes verformt und der mitgebrachte Schmierstoff effizient abgenommen.

Anhand der Zeichnung wird eine Ausführungsform des Erfindungsgegenstandes erläutert. Es zeigen:
- Fig. 1: eine schematische Seitenansicht eines Teils eines offenen Zahnradgetriebes mit einem zugeordneten Schmierstoff-Sammler, und
- Fig. 2: eine Ansicht ähnlich der von Fig. 1, wobei Teile des Schmierstoff-Sammlers weggebrochen sind.

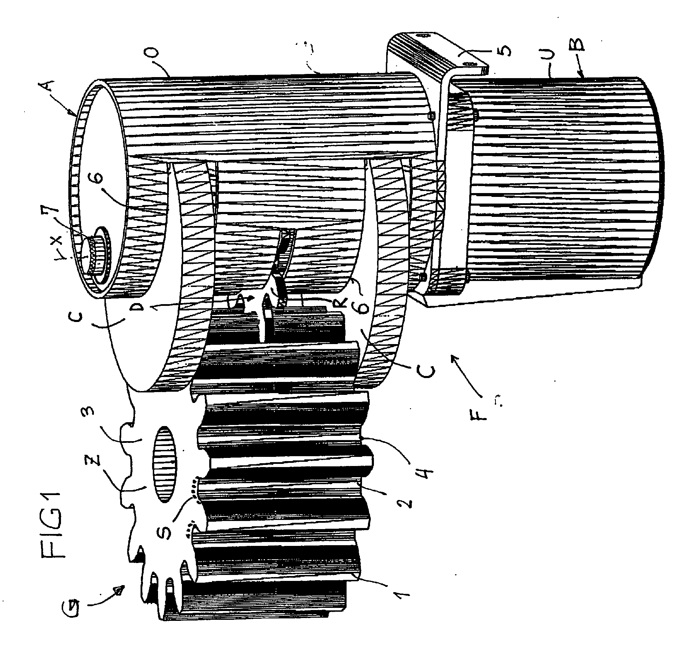

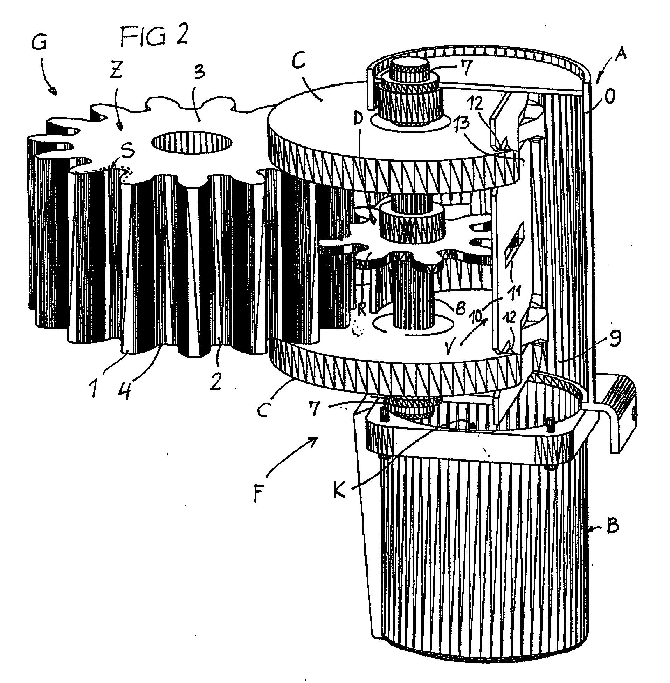

Die Fig. 1 und 2 zeigen ein geschmiertes Stirnzahnrad Z eines offenen Zahnradgetriebes G und einen dem Zahnrad Z wirkungsmäßig zugeordneten Schmierstoffsammler F. Der Schmierstoff-Sammler F, der eine eigenständige Einheit ist, wird nachfolgend in Verbindung mit dem Zahnrad Z beschrieben.

Das Stirnzahnrad Z hat Zähne und Zahnlückengründe 1, 2, die an Seitenflächen 3, 4 enden. Da das Stirnzahnrad Z geschmiert ist (mit Fett, Öl oder einem anderen Schmierstoff) wandert Schmierstoff S allmählich zu den Seitenflächen 3, 4, wo er sich ablagert.

Der wirkungsmäßig dem Stirnzahnrad Z zugeordnete Schmierstoffsammler F weist bei der gezeigten Ausführungsform zwei scheibenförmige Schmierstoff-Abnahmeelemente C auf, die annähernd parallel zu den Seitenflächen 3, 4 angeordnet und in etwa mit der Zahnradbreite beabstandet sind. Jedes Abnahmeelement C ist beispielsweise eine Rundbürste, eine Filzscheibe oder eine Schaumstoffscheibe oder dgl., d.h., ein Gebilde, das saugfähig und zumindest im Außenbereich elastisch verformbar ist. Alternativ könnte das Abnahmeelement C jedoch auch aus einer Vielzahl einzelner Abstreifer oder Bürsten bestehen, die fingerartig nach außen streben.

Der Schmierstoff-Sammler F besitzt ein annähernd rohrförmiges, beidendig geschlossenes Gehäuse A, das aus einer oberen Abnahmesektion O und einer unteren Sammelsektion U besteht. Die Sammelsektion U kann als abnehmbarer Behälter B ausgelegt sein. Oberhalb der Sammelsektion U ist wenigstens ein Befestigungselement 5, z.B. ein Flansch, vorgesehen, mit dem der Schmierstoff-Sammler F in seiner Betriebslage in Zuordnung zum Stirnzahnrad Z montiert wird.

Die beiden Abnahmeelemente C sind im Inneren der oberen Abnahmesektion O um eine gemeinsame Achse X drehbar gelagert und greifen durch Wandschlitze 6 nach außen. Sie stehen mit den Seitenflächen 3, 4 in permanentem abstreifenden Kontakt und greifen von außen bis über die Zahnlückengründe 2 auf die Seitenflächen 3, 4.

Oben auf einem Deckel der oberen Aufnahmesektion O ist eine Lagerung 7 angedeutet. Ferner ist ein Antrieb D im Schmierstoff-Sammler F enthalten, mit dem jedes Abnahmeelement C zu einer drehenden Förderbewegung antreibbar ist. Im gezeigten Ausführungsbeispiel weist der Antrieb D ein Ritzel R auf, das mit dem Stirnzahnrad Z kämmt, dessen Drehbewegung abgreift, und die Abnahmeelemente C gegensinnig zum Stirnzahnrad Z antreibt.

Bei einer nicht gezeigten Alternative könnte ein eigenständiger Antrieb D für das oder die Abnahmeelemente C vorgesehen sein, z.B. ein eigener Elektromotor oder dgl.

Der Schmierstoff-Sammler F in den Fig. 1 und 2 ist mit zwei Abnahmeelementen C dargestellt, die beide Seitenflächen 3, 4 des Stirnzahnrades Z abstreifend beaufschlagen. Es würde jedoch gegebenenfalls ausreichen, nur das in den Fig. 1 und 2 unten gezeigte Abnahmeelement C vorzusehen und nur die untere Seitenfläche 4 zu reinigen.

Gemäß Fig. 2 sind beide Abnahmeelemente C auf einer gemeinsamen Welle 8 drehfest oder weitgehend drehfest angeordnet, die in den Lagern 7 gelagert ist. Das Ritzel R sitzt zwischen den beiden Abnahmeelementen C auf der Welle 8 und kämmt mit den Zähnen 1 des Stirnzahnrades Z. Im Sammel-Behälter B ist eine Sammelkammer K definiert. Zur Sammelkammer K führt ein Schmierstoff-Leitpfad 9 von der oberen Aufnahmesektion O.

Jedem Abnahmeelement C ist eine Schmierstoff-Ableitvorrichtung V wirkungsmäßig zugeordnet. Bei der gezeigten Ausführungsform besteht diese aus einer Wand 10, z.B. einer ebenen oder gebogenen Platte, die stehend, d.h. in etwa parallel zur Achse der Welle 8, in der oberen Aufnahmesektion O montiert ist (z.B. eingeschweißt), und sich innerhalb des Außendurchmessers der Abnahmeelemente C befindet. Im Durchgangsbereich der Außenumfänge der Abnahmeelemente C sind jeweils zu einem Mittelsteg 13 konvergierende Schlitze mit Abstreif- und Quetschrändern 12 in die Platte eingeformt. Gegebenenfalls ist auch ein Schlitz 11 zum Durchgreifen des Ritzels R vorgesehen.

Bei einer nicht gezeigten Alternative könnte auch eine annähernd radial zur Achse der Welle 8 ausgerichtete Abstreifplatte oder ein Abstreifmaul das Abnahmeelement beaufschlagen, oder ein Quetschwalzenpaar oder dgl.

### Funktion:

Der Schmierstoff-Sammler F wird so montiert, dass die beiden Abnahmeelemente C die Seitenflächen 3, 4 des Stirnzahnrades Z mit vorbestimmten Anpressdruck kontaktieren. Sobald sich das Stirnzahnrad Z dreht, drehen sich auch die beiden Abnahmeelemente C, und wird jeglicher sich an den Seitenflächen 3, 4 sammelnder Schmierstoff S von den Abnahmeelementen C abgestreift und zur Ableitvorrichtung V im Inneren des Fettstoffsammlers F gefördert. Die Ableitvorrichtung V nimmt den mitgebrachten Schmierstoff zum überwiegenden Teil von jedem Abnahmeelement C ab. Dieser Schmierstoff läuft dann entlang des Leitpfades 9 nach unten in die Sammelkammer K. Sobald die Sammelkammer K voll ist, wird sie abgenommen und entleert. Gegebenenfalls ist ein Füllstandsmelder vorgesehen, der ein optisches oder akustisches Signal anbietet, sobald die Sammelkammer K voll zu werden droht. Der Schmierstoffsammler F funktioniert unabhängig von der Drehrichtung des Stirnzahnrades Z. Bei anderen Zahnradtypen werden die Abnahmeelemente oder das Abnahmeelement so ausgebildet und angeordnet, dass sie sich sammelnden Schmierstoff dort abnehmen, wo er sich bei diesem anderen Zahnradtyp ablagert. Sollte das zu säubernde Zahnrad eine schräge Lage im Raum einnehmen, dann könnte das Gehäuse A so gestaltet sein, dass die untere Sammelsektion U gegenüber der oberen Aufnahmesektion O abknickt und im Wesentlichen vertikal positioniert ist. Die Komponenten, aus denen der Schmierstoffsammler F besteht, können überwiegend aus Kunststoff ausgebildet sein, der gegen den jeweiligen Schmierstofftyp resistent ist. Daraus resultiert ein geringes Gewicht des Schmierstoffsammlers. Das Ritzel R kann in seinem Durchmesser zusammen mit den Durchmessern der Abnahmeelemente so auf den Durchmesser des Zahnrads oder dessen Zähnezahl abgestimmt sein, dass sich eine Übersetzung ins Schnellere oder ins Langsamere ergibt. Bei einem eigenständigen Antrieb des Schmierstoffsammlers F könnte dieser so ausgelegt werden, dass gegebenenfalls das oder die Abnahmeelemente gleichsinnig mit dem Zahnrad rotieren, und gegebenenfalls wesentlich langsamer oder auch schneller als dieses.

## Patentansprüche

1. Offenes Zahnradgetriebe (G), mit wenigstens einem drehangetriebenen, geschmierten Zahnrad (Z), das zumindest zum Teil freiliegend angeordnet ist, **dadurch gekennzeichnet, dass** dem Zahnrad (Z) ein Schmierstoffsammler (F) zugeordnet ist, der wenigstens ein das Zahnrad (Z) kontaktierendes Schmierstoff-Abnahmeelement (C), eine das Schmierstoff-Abnahmeelement (C) beaufschlagende Schmierstoff-Ableitvorrichtung (V), wenigstens eine Sammelkammer (K), und einen Antrieb (D) aufweist, mit dem das Schmierstoff-Abnahmeelement (C) zu einer vom Zahnrad (Z) zur Schmierstoff-Ableitvorrichtung (V) gerichteten Förderbewegung antreibbar ist.

2. Offenes Zahnradgetriebe nach Anspruch 1, **dadurch gekennzeichnet, dass** der Antrieb (D) ein mit dem Schmierstoff-Abnahmeelement (C) gekoppeltes Ritzel (R) aufweist, das von dem Zahnradgetriebe (G) angetrieben wird, vorzugsweise mit dem vom Schmierstoff-Abnahmeelement (C) kontaktierten oder einem anderen Zahnrad des Zahnradgetriebes kämmt.

3. Offenes Zahnradgetriebe nach Anspruch 1, **dadurch gekennzeichnet, dass** der Schmierstoff-Sammler (F) einen eigenen Antrieb für das Schmierstoff-Abnahmeelement (C) aufweist.

4. Offenes Zahnradgetriebe nach Anspruch 1, **dadurch gekennzeichnet, dass** das Schmierstoff-Abnahmeelement (C) scheibenförmig oder rundbürstenförmig ausgebildet und drehbar angeordnet ist, und einen nachgiebigen Kontaktbereich aufweist.

5. Offenes Zahnradgetriebe nach Anspruch 1, **dadurch gekennzeichnet, dass** das Schmierstoff-Abnahmeelement (C) mehrere um eine Antriebsachse (X) drehbar angeordnete Einzelbürsten oder Einzelabstreifer aufweist.

6. Offenes Zahnradgetriebe nach Anspruch 1, **dadurch gekennzeichnet, dass** das Schmierstoff-Abnahmeelement (C) saugfähig, und vorzugsweise im Außenbereich nachgiebig verformbar, ausgebildet ist.

7. Offenes Zahnradgetriebe nach Anspruch 1, **dadurch gekennzeichnet, dass** die Schmierstoffableitvorrichtung (V) wenigstens einen relativ zum Schmierstoff-Abnahmeelement (C) angreifenden Abstreifer aufweist, und dass die Sammelkammer (K) unterhalb der Schmierstoff-Ableitvorrichtung (V) angeordnet ist.

8. Offenes Zahnradgetriebe nach wenigstens einem der vorhergehenden Ansprüche, **dadurch gekennzeichnet, dass** das Zahnrad (Z) ein Stirnrad mit im Wesentlichen ebenen Seitenflächen (3, 4) ist, und dass der Schmierstoff-Sammler (F) so angeordnet ist, dass das Schmierstoff-Abnahmeelement (C) die nach unten weisende Seitenfläche (4) von außen her unten kontaktiert und bis über die Zahnlückengründe (2) nach innen greift.

9. Offenes Zahnradgetriebe nach wenigstens einem der Ansprüche 1 bis 7, **dadurch gekennzeichnet, dass** das Zahnrad (Z) ein Stirnrad mit im Wesentlichen ebenen Seitenflächen (3, 4) ist, dass der Schmierstoff-Sammler (F) zwei mit der Zahnradbreite beabstandete Schmierstoff-Abnahmeelemente (C) aufweist, und dass der Schmierstoff-Sammler (F) so angeordnet ist, dass jedes Schmierstoff-Abnahmeelement eine Seitenfläche (3, 4) von außen her kontaktiert und bis über die Zahnlückengründe (2) nach innen greift.

10. Offenes Zahnradgetriebe nach wenigstens einem der vorhergehenden Ansprüche, **dadurch gekennzeichnet, dass** das eine oder beide Schmierstoff-Abnahmeelement (C) auf einer Welle (8) angeordnet sind, mit der der Antrieb (D) verbunden ist.

11. Offenes Zahnradgetriebe nach Anspruch 2, **dadurch gekennzeichnet, dass** das Ritzel (R) auf der Welle (8) sitzt und einen kleineren Außendurchmesser hat als das oder die Schmierstoff-Abnahmeelemente (C).

12. Offenes Zahnradgetriebe nach wenigstens einem der vorhergehenden Ansprüche, **dadurch gekennzeichnet, dass** das Ritzel (R) zwischen den beiden Schmierstoff-Abnahmeelementen (C) auf der Welle (8) angeordnet ist.

13. Offenes Zahnradgetriebe nach Anspruch 1, **dadurch gekennzeichnet, dass** die Schmierstoff-Ableitvorrichtung (V) auf der dem Zahnrad (Z) abgewandten Seite im Schmierstoff-Sammler (F) angeordnet ist.

14. Offenes Zahnradgetriebe nach wenigstens einem der vorhergehenden Ansprüche, **dadurch gekennzeichnet, dass** der Schmierstoffsammler (F) ein rohrartiges Gehäuse (A) mit wenigstens einem Befestigungselement (5) aufweist, dass das Gehäuse (A) eine obere Aufnahmesektion (O) und eine untere Sammelsektion (U) aufweist, dass das wenigstens eine Schmierstoff-Abnahmeelement (C), der Antrieb (D) und die Ableitvorrichtung (V) in der oberen Aufnahmesektion (O) angeordnet sind, dass die Sammelkammer (K) in der unteren Sammelsektion (U) vorgesehen ist, und dass von der oberen Aufnahmesektion (O) wenigstens ein Schmierstoff-Ableitpfad (9) nach unten in die Sammelkammer (K) führt.

15. Offenes Zahnradgetriebe nach wenigstens einem der vorhergehenden Ansprüche, **dadurch gekennzeichnet, dass** das wenigstens eine Schmierstoff-Abnahmeelement (C) mit der Welle (8) im Inneren der oberen Aufnahmesektion (O) gelagert ist, und dass das Schmierstoff-Abnahmeelement (C) durch einen Wandschlitz (6) aus der oberen Aufnahmesektion (O) nach außen zum Zahnrad (Z) vorsteht.

16. Offenes Zahnradgetriebe nach Anspruch 14, **dadurch gekennzeichnet, dass** die untere Sammelsektion (U) ein abnehmbarer Behälter (B) ist.

17. Offenes Zahnradgetriebe nach Anspruch 1, **dadurch gekennzeichnet, dass** die Schmierstoff-Ableitvorrichtung (V) eine, vorzugsweise parallel zur Drehachse des Schmierstoff-Abnahmeelements (C), innerhalb des Außendurchmessers des Schmierstoff-Abnahmeelements (C) stehend montierte Wand (10) mit eingeformten, am Schmierstoff-Abnahmeelement (C) angreifenden Abstreif- und Quetschrändern (12) aufweist.

18. Offenes Zahnradgetriebe nach Anspruch 17, **dadurch gekennzeichnet, dass** die Wand (10) eine ebene oder gebogene Platte mit zwei von gegenüberliegenden Plattenrändem ausgehenden, bis zu einem Mittelsteg (13) verlaufenden Schlitzen ist, deren jeder in Richtung zum Mittelsteg (13) konvergierend ausgebildet ist.

## Claims

1. Open gear transmission (G), with at least one rotatably driven, lubricated gear wheel (Z), which is disposed at least partly in an exposed manner, **characterised in that** a lubricant collector (F) is associated with the gear wheel (Z), which collector comprises at least one lubricant removal element (C) contacting the gear wheel (Z), a lubricant drain device (V) acting on the lubricant removal element (C), at least one collecting chamber (K), and a drive (D), by means of which the lubricant removal element (C) can be driven into a delivery movement which is directed from the gear wheel (Z) to the lubricant drain device (V).

2. Open gear transmission according to Claim 1, **characterised in that** the drive (D) comprises a pinion (R) which is coupled to the lubricant removal element (C), is driven by the gear transmission (G) and preferably meshes with the gear wheel which is contacted by the lubricant removal element (C) or another gear wheel of the gear transmission.

3. Open gear transmission according to Claim 1, **characterised in that** the lubricant collector (F) comprises its own drive for the lubricant removal element (C).

4. Open gear transmission according to Claim 1, **characterised in that** the lubricant removal element (C) is formed in the shape of a disc or circular brush and disposed in a rotatable manner, and comprises a compliant contact region.

5. Open gear transmission according to Claim 1, **characterised in that** the lubricant removal element (C) comprises a plurality of individual brushes or individual scrapers disposed so as to be rotatable about a drive axis (X).

6. Open gear transmission according to Claim 1, **characterised in that** the lubricant removal element (C) is formed so as to be absorbent and preferably compliantly deformable in the outer region.

7. Open gear transmission according to Claim 1, **characterised in that** the lubricant drain device (V) comprises at least one scraper which acts relative to the lubricant removal element (C), and that the collecting chamber (K) is disposed below the lubricant drain device (V).

8. Open gear transmission according to at least one of the preceding Claims, **characterised in that** the gear wheel (Z) is a spur gear with substantially plane side faces (3, 4), and that the lubricant collector (F) is disposed so that the lubricant removal element (C) contacts the downward pointing side face (4) at the bottom from the outside and reaches inwards over the tooth space bases (2).

9. Open gear transmission according to at least one of Claims 1 to 7, **characterised in that** the gear wheel (Z) is a spur gear with substantially plane side faces (3, 4), that the lubricant collector (F) comprises two lubricant removal elements (C) spaced apart by the gear wheel width, and that the lubricant collector (F) is disposed so that each lubricant removal element contacts a side face (3, 4) from the outside and reaches inwards over the tooth space bases (2).

10. Open gear transmission according to at least one of the preceding Claims, **characterised in that** one or both lubricant removal element(s) (C) is/are disposed on a shaft (8) to which the drive (D) is connected.

11. Open gear transmission according to Claim 2, **characterised in that** the pinion (R) is seated on the shaft (8) and has a smaller outside diameter than the lubricant removal element or elements (C).

12. Open gear transmission according to at least one of the preceding Claims, **characterised in that** the pinion (R) is disposed between the two lubricant removal elements (C) on the shaft (8).

13. Open gear transmission according to Claim 1, **characterised in that** the lubricant drain device (V) is disposed in the lubricant collector (F) on the side which is remote from the gear wheel (Z).

14. Open gear transmission according to at least one of the preceding Claims, **characterised in that** the lubricant collector (F) comprises a tube-like housing (A) with at least one fastening element (5), that the housing (A) comprises an upper receiving section (0) and a lower collecting section (U), that the at least one lubricant removal element (C), the drive (D) and the drain device (V) are disposed in the upper receiving section (O), that the collecting chamber (K) is provided in the lower collecting section (U), and that at least one lubricant drain path (9) leads from the upper receiving section (O) downwards into the collecting chamber (K).

15. Open gear transmission according to at least one of the preceding Claims, **characterised in that** the at least one lubricant removal element (C) is mounted with the shaft (8) in the interior of the upper receiving section (O), and that the lubricant removal element (C) projects through a wall slot (6) out of the upper receiving section (O) outwards to the gear wheel (Z).

16. Open gear transmission according to Claim 14, **characterised in that** the lower collecting section (U) is a removable container (B).

17. Open gear transmission according to Claim 1, **characterised in that** the lubricant drain device (V) comprises a wall (10) mounted upright within the outside diameter of the lubricant removal element (C), preferably parallel to the axis of rotation of the lubricant removal element (C), with formed-in scraper and squeeze edges (12) acting on the lubricant removal element (C).

18. Open gear transmission according to Claim 17, **characterised in that** the wall (10) is a plane or bent plate with two slots which start from opposite plate edges, extend up to a central web (13) and each of which is formed so as to converge in the direction of the central web (13).

## Revendications

1. Engrenage découvert (G) avec au moins une roue dentée (Z) graissée, entraînée par rotation, qui est disposée au moins partiellement à découvert, **caractérisé en ce qu'**un collecteur de graisse (F) est associé à la roue dentée (Z), lequel présente au moins un élément de réception de la graisse (C) contactant la roue dentée (Z), un dispositif de dérivation de la graisse (V) alimentant l'élément de réception de la graisse (C), au moins une chambre collectrice (K) et un entraînement (D), à l'aide duquel l'élément de réception de la graisse (C) peut être entraîné pour un mouvement de transport dirigé de la roue dentée (Z) vers le dispositif de dérivation de la graisse (V).

2. Engrenage découvert selon la revendication 1, **caractérisé en ce que** l'entraînement (D) présente un pignon (R) couplé à l'élément de réception de la graisse (C), lequel est entraîné par l'engrenage (G), s'engrène de préférence avec la roue dentée contactée par l'élément de réception de la graisse (C) ou une autre roue dentée de l'engrenage.

3. Engrenage découvert selon la revendication 1, **caractérisé en ce que** le collecteur de graisse (F) présente un propre entraînement pour l'élément de réception de la graisse (C).

4. Engrenage découvert selon la revendication 1, **caractérisé en ce que** l'élément de réception de la graisse (C) est réalisé en forme de disque ou en forme de brosse ronde et est logé de manière rotative et présente une zone de contact flexible.

5. Engrenage découvert selon la revendication 1, **caractérisé en ce que** l'élément de réception de la graisse (C) présente plusieurs brosses individuelles ou racles individuelles disposées de manière à pouvoir pivoter autour d'un axe d'entraînement (X).

6. Engrenage découvert selon la revendication 1, **caractérisé en ce que** l'élément de réception de la graisse (C) est réalisé de manière absorbante, et de préférence déformable élastiquement dans la zone externe.

7. Engrenage découvert selon la revendication 1, **caractérisé en ce que** le dispositif de dérivation de la graisse (V) présente au moins une racle étant appliquée par rapport à l'élément de réception de la graisse (C), et **en ce que** la chambre collectrice (K) est disposée au-dessous du dispositif de dérivation de la graisse (V).

8. Engrenage découvert selon au moins l'une quelconque des revendications précédentes, **caractérisé en ce que** la roue dentée (Z) est une roue dentée droite avec des surfaces latérales essentiellement planes (3, 4), et **en ce que** le collecteur de graisse (F) est disposé de telle manière que l'élément de réception de la graisse (C) contacte en bas la surface latérale (4) indiquant le bas depuis l'extérieur et s'engage vers l'intérieur jusqu'aux fonds des entredents (2).

9. Engrenage découvert selon au moins l'une quelconque des revendications 1 à 7, **caractérisé en ce que** la roue dentée (Z) est une roue dentée droite avec des surfaces latérales (3, 4) essentiellement planes, **en ce que** le collecteur de graisse (F) présente deux éléments de réception de la graisse (C) séparés par la largeur de la roue dentée, et **en ce que** le collecteur de la graisse (F) est disposé de telle sorte que chaque élément de réception de la graisse contacte une surface latérale (3, 4) depuis l'extérieur et s'engage vers l'intérieur jusqu'aux fonds des entredents (2).

10. Engrenage découvert selon au moins l'une quelconque des revendications précédentes, **caractérisé en ce que** l'un ou les deux éléments de réception de la graisse (C) sont disposés sur un arbre (8), auquel est relié l'entraînement (D).

11. Engrenage découvert selon la revendication 2, **caractérisé en ce que** le pignon (R) siège sur l'arbre (8) et est doté d'un diamètre extérieur plus petit que le ou les éléments de réception de la graisse (C).

12. Engrenage découvert selon au moins l'une quelconque des revendications précédentes, **caractérisé en ce que** le pignon (R) est disposé entre les deux éléments de réception de la graisse (C) sur l'arbre (8).

13. Engrenage découvert selon la revendication 1, **caractérisé en ce que** le dispositif de dérivation de la graisse (V) est disposé sur le côté opposé à la roue dentée (Z) dans le collecteur de graisse (F).

14. Engrenage découvert selon au moins l'une quelconque des revendications précédentes, **caractérisé en ce que** le collecteur de graisse (F) présente un boîtier de type tuyau (A) avec au moins un élément de fixation (5), **en ce que** le boîtier (A) présente une section de réception supérieure (O) et une section collectrice inférieure (U), **en ce qu'**au moins l'un des éléments de réception de la graisse (C), l'entraînement (D) et le dispositif de dérivation (V) sont disposés dans la section de réception supérieure (O), **en ce que** la chambre collectrice (K) est prévue dans la section collectrice inférieure (U), et **en ce qu'**au moins un chemin de dérivation de la graisse (9) mène de la section de réception supérieure (O) vers le bas à la chambre collectrice (K).

15. Engrenage découvert selon au moins l'une quelconque des revendications précédentes, **caractérisé en ce qu'**au moins l'un des éléments de réception de la graisse (C) est logé avec l'arbre (8) à l'intérieur de la section de réception supérieure (O), et **en ce que** l'élément de réception de la graisse (C) fait saillie au travers d'une fente de paroi (6) depuis la section de réception supérieure (O) vers l'extérieur en direction de la roue dentée (Z).

16. Engrenage découvert selon la revendication 14, **caractérisé en ce que** la section collectrice inférieure (U) est un réservoir (B) amovible.

17. Engrenage découvert selon la revendication 1, **caractérisé en ce que** le dispositif de dérivation de la graisse (V) présente une paroi (10) montée verticalement au sein du diamètre extérieur de l'élément de réception de la graisse (C), de préférence parallèlement à l'axe de rotation de cet élément avec des arêtes de raclage et d'écrasement (12) moulés, étant appliquées sur l'élément de réception de la graisse (C).

18. Engrenage découvert selon la revendication 17, **caractérisé en ce que** la paroi (10) est une plaque plane ou arquée avec deux fentes partant des arêtes de plaque opposées, s'étendant jusqu'à une barre centrale (13), dont chaque fente est réalisée de manière à converger en direction de la barre centrale (13).
